# EUROPÄISCHE PATENTSCHRIFT

(11) **EP 1 425 444 B1**
(45) Veröffentlichungstag und Bekanntmachung des Hinweises auf die Patenterteilung: **25.04.2007**
(21) Anmeldenummer: 02754720.7
(22) Anmeldetag: 20.06.2002
(51) Int. Cl.: D01F 6/84, C08G 63/695

(54) **PILLARME POLYESTERFASER**
NON-PILLING POLYESTER FIBRES
FIBRES DE POLYESTER RESISTANTES AU BOULOCHAGE

(30) Priorität: 22.06.2001 DE 10129688
(43) Veröffentlichungstag der Anmeldung: 09.06.2004
(73) Patentinhaber: TREVIRA GMBH, 60528 Frankfurt am Main (DE)
(72) Erfinder: MAURER, Andreas, 86863 Langenneufnach (DE); HÖHENBERGER, Markus, 63741 Aschaffenburg (DE); SCHREINER, Roland, 86399 Bobingen (DE)
(74) Vertreter: Luderschmidt, Schüler & Partner
(86) Internationale Anmeldenummer: PCT/EP2002/006829
(87) Internationale Veröffentlichungsnummer: WO 2003/000968

(56) Entgegenhaltungen:
- DD-A- 104 089
- DE-A- 2 453 231
- DE-A- 4 111 066
- US-A- 3 335 211
- US-A- 4 483 954

## Beschreibung

Die Erfindung betrifft eine pillarme Polyesterfaser auf Basis von Polyethylenterephtalat sowie wie ein Verfahren zur Herstellung derselben.

Unter Pillen oder dem sog. Pillingeffekt versteht man die Bildung von kleinen Knötchen (Pills) an der Oberfläche von textilen Flächengebilden. Diese Pills entstehen dadurch, daß aus der Oberfläche eines textilen Flächengebildes z. B. eines Kleidungsstückes Faserenden oder lose Faserteile herausragen, die durch eine beim Tragen des Kleidungsstückes erzeugte Scheuerbeanspruchung zu Knötchen zusammenrollen. Wegen der großen Festigkeit der Polyesterfasern können diese Knötchen nicht abfallen, sondern verbleiben an der Oberfläche und bieten dem Betrachter ein unschönes Bild. Physikalisch deutet man dieses Phänomen damit, daß Polyesterfasern eine im Vergleich zu Naturfasern große Festigkeit insbesondere auch eine große Querfestigkeit besitzen.

Es ist zwar prinzipiell möglich, die Knötchen mechanisch zu beseitigen z. B. durch Bürsten oder Abschaben. Dies ist sehr mühsam und aufwendig und kann nicht verhindern, daß sich stets wieder neue Pills bilden.

Man hat bereits zahlreiche Versuche unternommen, um diesen Nachteil zu beheben. Dabei stand vor allem im Mittelpunkt, die Querfestigkeit von Polyesterfasern zu reduzieren,
wobei jedoch darauf zu achten ist, daß dabei die Reißfestigkeit der Fasern nicht zu stark zurückgenommen wird, um den Weiterverarbeitungsprozess ohne wesentliche Schädigung der Fasern in gleicher Weise wie z. B. bei den normalen Baumwolltypen durchführen zu können.

Die meisten Versuche das Pilling zu reduzieren, gehen in die Richtung, das Polymer zu modifizieren, insbesondere das durchschnittliche Molekulargewicht zu senken. Dies kann durch Einbau sog. Überbrücker oder temporärer Verzweiger oder auch durch Veränderung der Polymerstruktur mittels Permanentverzweiger geschehen.

Das Prinzip der temporären Überbrückung oder Verzweigung besteht darin, daß man die Polyesterkette mit einer thermisch oder hydrolytisch-labilen Bindung in der Polymerkette ausrüstet, welche nach dem Verspinnen, z. B. beim Färben des textilen Flächenprodukts oder auch der Flocke hydrolytisch aufbricht.

Beispiele von derartigen temporär überbrückten Polyestern finden sich z. B. in der FR 2 290 511, wo vor der Umesterung 0,01 bis 2 Gew.-% die Diphenylsilandiol, bezogen auf Dimethylterephthalat (DMT) eingeführt wird. Jedoch sind hier die Bruchdehnungen zu hoch, um eine Verarbeitbarkeit mit BaumwoJlfasern zu erlauben, ferner ist die Reißfestigkeit zu gering für das Weben der Stapelfasergame.

Ein ähnliche Lehre mit temporären Verzweigungen findet sich in der FR1 589 057, wonach jedoch Fasern mit den gleichen Nachteilen, wie in der vorstehend erwähnten französischen Schrift, erhalten werden.

Zu den Verfahren, welche mit Permanentverzweigem arbeiten, gehören Herstellungsmethoden, bei denen beispielsweise eine Verbindung wie Pentaerythrit eingesetzt wird. Man nutzt hier den Effekt aus, daß Fasern aus verzweigten, steifen Materialien im fertigen Produkt früher abbrechen als solche aus entsprechenden linearen, flexiblen Polymere. Von Nachteil bei derartigen Verfahren ist jedoch, daß die verzweigten Polymere gegenüber linearen Polymeren bei gleicher Masse eine niedrigere Schmelzviskosität zeigen.

Eine Absenkung des Molekulargewichts ist aufgrund der notwendigen hohen Viskosität zum Verspinnen nicht möglich, somit ist die Effektivität dieser Verfahrensweise sehr begrenzt. Die bisher bekannten Verfahren mit permanenter Verzweigung haben deshalb hinsichtlich des Pillverhaltens nicht die guten Ergebnisse der temporären Verzweigung erreicht.

In der US PS 3 335 211 wird ein Verfahren zum Schmelzspinnen von Polyestern mit temporärer Verzweigung beschrieben. Die Polyester sind mit einer Oxysilicium-Verbindung modifiziert. Dazu wird eine Oxysilicium-Verbindung der Polyestermasse vor dem Schmelzspinnen zugefügt. Es soll sich dabei eine wasserfreie Schmelze bilden, die eine Schmelzviskosität bei 275 °C von etwa 1000 bis 6000 Poise hat. Die zugegebenen Siliciumverbindungen weisen die allgemeinen Formeln auf: 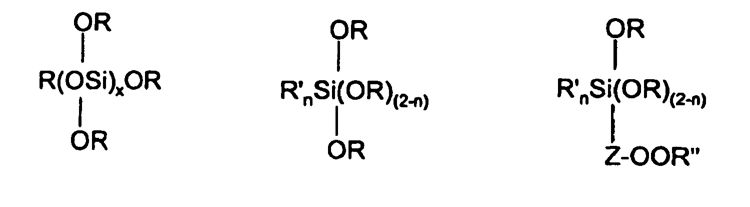 wobei R, R' und R" ausgewählt sind aus der Gruppe von Kohlenwasserstoff- oder Oxykohlenwasserstoffresten mit 1 - 6 Kohlenstoffatomen, Z eine zweiwertige gesättigte Kohlenwasserstoffgruppe mit 1 - 6 Kohlenstoffatomen ist, x eine Zahl von 1 - 20 und n eine Zahl von 0 - 2.

Die Schmelze muß wasserfrei gehalten werden, nach dem Schmelzspinnen läßt man auf die gesponnenen Fasern Feuchtigkeit einwirken.

Obwohl in Spalte 8 im 3. Absatz der vorstehend zitierten US-Patentschrift auch die Rede davon ist, daß das dort beschriebene Verfahren auf die direkte Veresterung von freier Terephthalsäure mit Ethylenglycol angewendet werden kann, sind die Beschreibung, die Beispiele und die Ansprüche auf ein Verfahren gerichtet, das von einem Ester der Terephthalsäure ausgeht wie Dimethylterephthalat, bei dem dann eine übliche Umesterung und dann die Polykondensation durchgeführt wird.

Bei einem Nacharbeiten der Lehren der US PS 3 335 211 unter Verwendung von freier Terephthalsäure hat sich gezeigt, daß es auf Grund des während der Polykondensation freiwerdenden Reaktionswassers zur hydrolytischen Spaltung der eingebauten Verzweigung kommt. Ebenso ist oftmals eine starke Vergelung des Polymermaterials zu beobachten. Die sog. PTA-Route (Pure terephthalic acid route) ist somit im allgemeinen gemäß der Lehre von US PS 3 335 211 nicht möglich.

Darüber hinaus weist das Verfahren eine Reihe von Nachteilen auf, und auch die Eigenschaften der Fasern, welche gemäß der US PS 3 335 211 unter Verwendung von Dimethyterephthalat hergestellt worden sind, sind unbefriedigend.

Die vorstehend geschilderten Befunde werden auch durch die DE 41 11 066 A1 bestätigt. Um eine Direkt - Veresterung ausgehend von reiner Terephthalsäure zu ermöglichen, wird in dieser Schrift vorgeschlagen, Terephthalsäure und Ethylenglycol kontinuierlich zu verestern und anschließend zu polykondensieren, wobei kontinuierlich Methoxyethyl- oder Propylsilikat in einer Menge von 300 - 700 ppm Silicium zu dem Zeitpunkt zugegeben wird, an dem das Präpolymere eine mittlere Molekularmasse, ausgedrückt als Gewicht Mw zwischen 9 000 und 16000 und ein Polydispersitätsindex zwischen 1,5 und 2 besitzt, eine Temperatur zwischen 260 und 290 °C aufweist und sich unter einem Druck zwischen 1,5 und 2,5 bar befindet, wobei die Dauer der Reaktion Silikat/Präpolymeres zumindest 5 Minuten beträgt.
Dieses Verfahren bringt sicher gegenüber der Lehre der US PS 3 335 211 Fortschritte, das Verfahren ist jedoch sehr eng umrissen, da die Herstellungsbedingungen eine starke Einschränkung hinsichtlich der Verfahrensparameter darstellen. Zudem ist der Einsatz von Methoxyethylsilikat bedenklich, da dieses Produkt, wenn es als Verzweiger eingesetzt wird, während des Verfahrens in 2-Methoxyethanol gespalten wird, das als fruchtschädigend und fortpflanzungsbeeinträchtigend eingestuft wird. Ein Teil dieser toxisch wirkenden Komponente verbleibt ungewollt im freien oder gebundenen Zustand im Polymeren und somit auch in der fertigen Faser.

Obwohl bereits eine ganze Reihe von Verfahren bekannt sind, mittels derer pillarme Polyesterfasern hergestellt werden können, besteht noch ein Bedürfnis nach verbesserten Verfahren sowie Fasern mit verbesserten Pilleigenschaften und sonstigen guten Eigenschaften.

Aufgabe der Erfindung ist es deshalb, ein Verfahren zur Herstellung von pillarmen Polyesterfasern auf Basis von Polyethylenterephthalat_zur Verfügung zu stellen, das sowohl für die Direktveresterung und Polykondensation von Terephthalsäure als auch für die Umesterung von Dimethylterephthalat und Polykondensation geeignet ist, das reproduzierbar zu guten Eigenschaften führt, das keine engen Reaktionsbedingungen vorschreibt, so z.B. daß das Zusatzmittel zu einer bestimmten Zeitpunkt während der Herstellung des Polyesters zugesetzt werden muß oder daß bestimmte Verfahrensbedingungen wie das Unterbrechen des Vakuums bei der Polykondensation oder das Einhalten eng begrenzter Polykondensationszeiten gegeben sein müssen.

Eine weitere Aufgabe der Erfindung ist es, ein Verfahren bereitzustellen, das sowohl für die kontinuierliche als auch für die diskontinuierliche Fahrweise geeignet ist.

Diese Aufgabe wird gelöst durch ein Verfahren zur Herstellung von pillarmen Polyesterfasern auf Basis von Polyethylenterephthalat durch Umesterung mindestens eines Dicarbonsäuredialkylesters oder Veresterung mindestens einer Dicarbonsäure mit mindestens einem Diol und nachfolgender Vorkondensation und Polykondensation in Gegenwart üblicher Katalysatoren und unter Mitverwendung von silizium-organischen Verbindungen, dadurch gekennzeichnet, daß man dem Reaktionsgemisch 100-2000 ppm einer Silicium-Organischen-Verbindung, berechnet als Silicium, bezogen auf das fertige Polykondensat zugibt, die am Silicium mindestens einen Substituenten der Formel 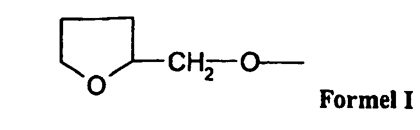 aufweist, und das erhaltene Polykondensat zu Fasern verarbeitet und diese zu irgendeinem Zeitpunkt nach dem Verspinnen mit einem wasserenthaltenden Medium zwecks Hydrolyse behandelt.

Die erhaltenen Fasern werden entweder als solche, vorzugsweise jedoch in einem bereits zu einem textilen Produkt verarbeiteten Zustand, hydrolytisch behandelt.

Vorzugsweise wird als Silicium-Organische-Verbindung Tetrakis[tetrahydrofurfuryloxy]silan verwendet.

Eine weitere vorteilhafte Silicium-Organische-Verbindung im Rahmen der Erfindung ist Tris[tetrahydrofurfuryloxy]methylsilan.

Das erfindungsgemäße Verfahren wird bevorzugt kontinuierlich durchgeführt. Es kann vorteilhaft auch diskontinuierlich durchgeführt werden.

Bevorzugt werden 100 - 2000 ppm der Silicium-Organische-Verbindung, berechnet als Silicium, bezogen auf das fertige Polykondensat verwendet.

Bei der DMT-Route ist es vorteilhaft die Silicium-Organische-Verbindung nach der Umesterung des Terephthalsäureesters zuzusetzen. Als Terephthalsäureester wird im Rahmen der Erfindung bevorzugt Dimethylterephthalat verwendet.

Es ist vorteilhaft, die Silicium-Organische-Verbindung zu einem Zeitpunkt zuzusetzen, bei dem das Polykondensat ein Molekulargewicht M_{w} von 3000 - 20 000 g/mol, insbesondere 10 000 - 15 000 g/mol aufweist.

Es ist ferner vorteilhaft, die Silicium-Organische-Verbindung zu einem Zeitpunkt einzubringen, bei dem der Druck der Polykondensationsschmelze 0,5 mbar - 1,5 bar, vorzugsweise 10 mbar - 200 mbar beträgt.

In einer besonders vorteilhaften Ausführungsform des erfindungsgemäßen Verfahrens wird die Silicium-Organische-Verbindung zu einem Zeitpunkt der Polykondensationsschmelze zugesetzt, bei dem der Carboxylgruppengehalt des Polykondensats < 35 mMol/kg ist.

Ein weiterer Gegenstand der Erfindung sind pillarme Polyesterfasern auf Basis von Polyethylenterephthalat erhältlich nach einem der vorstehend beschriebenen Verfahren. Die pillarmen Polyesterfasern zeichnen sich dadurch aus, daß sie eine extrem niedrige Zahl an Si-haltigen Partikeln (Gele) aufweisen, was sich vorteilhaft bei der Ausspinnung und Verarbeitung auswirkt.

Zur Durchführung des erfindungsgemäßen Verfahrens wird die Herstellung des Polyesters, z. B. des Polyethylenterephthalats an sich auf bekannte Weise vorgenommen.

Dabei wird entweder Dimethylterephthalat mit Ethylenglycol vermengt und einer Umesterung unterzogen, wonach dann die Polykondensation durchgeführt wird, oder es wird die freie Terephthalsäure direkt mit Glykol unter Anwendung von Druck verestert. In beiden Fällen entsteht eine oligomere Verbindung basierend auf Bishydroxyethylterephthalat, welches in bekannter Weise polykondensiert wird.

Bei der Umesterung und der Polykondensation können übliche Katalysatoren eingesetzt werden, die dem Durchschnittsfachmann aus dem Stand der Technik bekannt sind. Bevorzugt wird das Polyethylentherephthalat jedoch nach der sog. PTA-Route hergestellt, d. h. durch Umsetzung der freien Terephthalsäure mit Ethylenglykol, wobei die Veresterung mit dem Glykol unter Anwendung von Druck durchgeführt wird. Die dabei entstehende oligomere Verbindung wird sodann in an sich bekannter Weise polykondensiert.

Die Polykondensation an sich wird bis zu einem Polykondensationsgrad durchgeführt, bei dem das Polymer die üblichen für die Herstellung von Fasern erforderlichen Molekulargewichte erreicht.

Der erfindungsgemäße Zusatz der Silicium-Organischen-Verbindung des Tetrahydrofurfurylalkohols kann während verschiedener Phasen des Polyesterherstellungsprozesses erfolgen. So ist es möglich, die Silicium-Organische-Verbindung bei der PTA-Route nach dem Veresterungsschritt zuzufügen.

Bei der DMT-Route, d. h. bei der Herstellung des Polyesters aus Dicarbonsäuredialkylester und mindestens einem Diol werden die Silicium-Organischen-Verbindungen nach der Umesterung zugesetzt.

Besonders vorteilhaft ist es, die Silicium-Organische-Verbindung im Laufe der Polykondensation zuzusetzen.

Die Silicium-Organischen-Verbindungen, welche gemäß der Erfindung eingesetzt werden, weisen mindestens einen Substituenten am Silicium auf, entsprechend Formel I. Dieser Substituent leitet sich ab vom Tetrahydrofurfurylalkohol.

Silicium-Organische-Verbindungen sind solche Verbindungen, die direkte Silicium-Kohlenstoff-Verbindungen enthalten, zu Silicium-Organischen-Verbindungen gehören aber auch Verbindungen, in denen der Kohlenstoff über Sauerstoff-Stickstoff- oder Schwefelatome an das Silicium geknüpft ist. Nähere Hinweise über Silicium-Organische-Verbindungen sind z. B. Römpp Lexikon Chemie, 10. Völlig überarbeitete Auflage, Georg Thieme Verlag Stuttgart New York, den Seiten 4105 - 4106 zu entnehmen. Wesentlich im Rahmen der Erfindung ist, das mindestens ein Substituent sich vom Tetrahydrofurfurylalkohol ableitet. Als Silicium-Organische-Verbindungen, welche sich vom Tetrahydrofurfurylalkohol ableiten, sind besonders geeignet, Verbindungen der

**(C₅ H₉ 0₂ )ₓ Si (OR')_{z} R_{y}** **Formel II**

wobei x = 1, 2, 3 oder 4 ist, y = 0,1,2 oder 3 bedeutet, z kann die Werte 0 bis 3 einnehmen, wobei x + z + y = 4 ist, und R ein linearer oder cyclischer Alkylrest, nämlich Methyl, Ethyl, Propyl, Butyl oder höhere homologe Alkylreste, Cyclohexyl, Cyclopenthyl sowie 2 Hydroxyethyl oder 2 Methoxyethyl Reste oder auch aromatisch Substituenten wie Tolyl, Phenyl-, Naphtyl- oder Aryl- oder Aralkylgruppen sein können. R' ist Methyl oder Ethyl, Z kann die Werte 0 bis 3 einnehmen.

Die bevorzugt eingesetzten Silicium-Organischen-Verbindungen des Tetrahydrofurfiirylalkohols weisen folgende Formel auf.

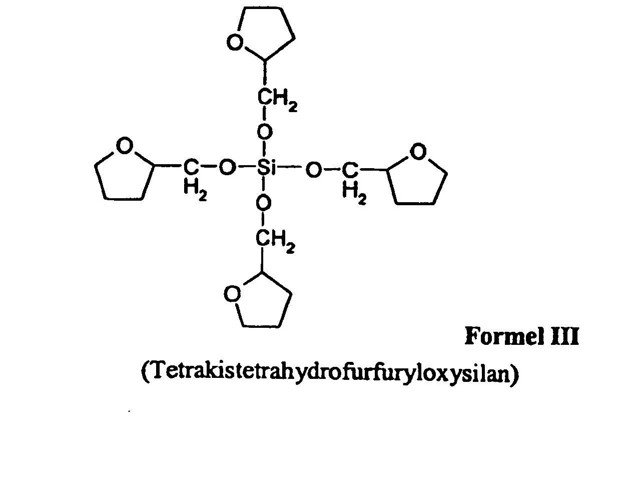

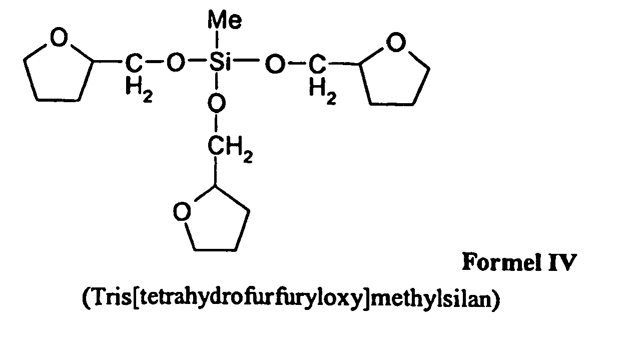

Die erfindungsgemäß eingesetzten Silicium-Organischen-Verbindungen können z. B. durch Umesterung von entsprechenden Organosilanen wie etwa Tetraoxysilan mit Tetrahydrofurfurylalkohol in Gegenwart von Katalysatoren wie Säuren zum Beispiel, H₃PO₃, Metalloxiden wie ZnO hergestellt werden.

Eine weitere Synthese zur Herstellung dieser Silicium-Organischen-Verbindungen besteht darin, daß man Si-Halogenide wie z. B. SiCl₄ in Gegenwart von Basen, z. B. Pyridin mit Tetrahydrofurfurylalkohol umsetzt.

Es war besonders überraschend, daß es gemäß der Erfindung möglich ist, pillarme Polyesterfasern insbesondere nach der PTA-Route reproduzierbar und störungsfrei herzustellen. Eine störende Gelbildung findet bei dem Verfahren gemäß der Erfindung nicht oder nur in geringem Maße statt.

Die Silicium-Organische-Verbindung kann vorteilhaft zu einem beliebigen Zeitpunkt nach der Veresterung dem Polykondensationsprozess zugesetzt werden. Ein großer Vorteil dieser Erfindung ist daher, daß dieses Verfahren auf die meisten Herstellungsverfahren ohne größere Prozessmodifizierungen angewendet werden kann. Aufgrund der sehr hohen Siedepunkte der jeweiligen Additive ist daher eine Zugabe selbst zu sehr späten Umsätzen hin in die Vakuumphase möglich.

Im Gegensatz zu der Lehre gemäß DE 4 111 066 A hat das erfindungsgemäße Verfahren daher den Vorteil, daß der Polykondensationsprozess nicht durch Unterbrechung der Vakuumphase gestoppt und für eine notwendige Reaktionsdauer verzögert werden muß.

Außerdem ist der Prozess nicht auf kontinuierlich arbeitende Systeme beschränkt. So hat sich gezeigt, daß das Additiv einem diskontinuierlichen Prozess ohne Unterbrechung der Vakuumphase zugegeben werden kann. Des weiteren hat der erfindungsgemäße Prozess den Vorteil, daß die Additive in Reinform ohne Lösungsmittel wie z. B. Ethylenglykol eingebracht werden können, d. h. ein Abbau des synthetisierten Polyesters aufgrund von zusätzlicher Glykolzugabe wird umgangen. Ferner wiederum ist der während der Verzweigungsreaktion entstehende Tetrahydrofurfurylalkohol mit einem Siedepunkt von 178°C als niedrigsiedend zu bezeichnen und kann während der PK-Phase einfach mit entstehendem Glykol aus dem Reaktionsmedium entfernt werden. Tetrahydrofurfurylalkohol ist im übrigen nicht toxisch.

Überraschenderweise hat sich gezeigt, daß die Verzweigungseffektivität bzw. die Verzweigungsdichte unter Verwendung des erfindungsgemäßen Additivs deutlich höher ist als bei Verwendung entsprechender Verbindungen wie etwa Tetraethoxysilan.

Die erhaltenen Fasern zeigen nach Färbung Molekulargewichte im Bereich 18 000 g/mol bis 30 000 g/mol und eignen sich damit zur Herstellung von pillarmen Flächen. Ferner zeigen die textilen Flächen einen weichen Griff, eine niedrige Neigung zum Knittern und neigen zu einer erhöhten und schnelleren Farbstoffaufnahme gegenüber den entsprechend unmodifizierten Materialien.

Das gemäß der Erfindung durch Mitverwendung eines Kieselsäureester des Furfürylalkohols erhaltene Polykondensat wird auf übliche Weise durch Schmelzspinnen zu Fasern verarbeitet werden. Die Fasern können gekräuselt, fixiert und geschnitten werden. Die Fasern können auf übliche Weise zu textilen Produkten wie textile Flächengebilde verarbeitet werden.
Wesentlich im Rahmen der Erfindung ist es jedoch, daß die Fasern zu irgendeinem Zeitpunkt nach dem Verspinnen mit einem wasserenthaltendem Medium zwecks Hydrolyse behandelt. Dabei kann es sich um wässrige Zubereitungen handeln, jedoch ist auch eine Behandlung mit Wasser oder Wasserdampf selbst möglich. Vorzugsweise wird die Behandlung an den Fasern vorgenommen, wenn sie bereits zu einem textilen Produkt verarbeitet sind.

Zu den bevorzugten Behandlungen mit einem wässrigen Medium gehören das Färben, aber auch Dämpfen und Fixieren mit Wasserdampf. Die Temperaturen für die Behandlung und die Behandlungszeit müssen so bemessen werden, daß die temporäre Verzweigung an ausreichenden Stellen aufgebrochen werden. Dazu eignen sich insbesondere Behandlungen bei Temperaturen von 80 - 150° C, ggf. unter Druck. Vorteilhaft sind Behandlungen im sauren pH-Bereich.

Die Behandlung mit einem wässrigen Milieu kann auch in der Weise geschehen, daß auf die Fasern eine wässrige Avivage oder sonstige Ausrüstung aufgebracht wird und die Fasern dann bei einer entsprechenden Temperatur behandelt werden, so daß das noch vorhandene Wasser hydrolytisch wirken kann und die temporären Verzweigungen in gewünschtem Maße aufbricht.

Die gemäß dem erfindungsgemäßen Verfahren hergestellten pillarmen Polyesterfasern zeichnen sich nach Behandlung mit Wasser durch gute mechanische Eigenschaften aus und verfügen trotzdem über eine reduzierte Neigung zum Pillen.

Besonders vorteilhaft ist es, daß die erhaltenen Fasern, um ihre pillarmen Eigenschaften zu entwickeln, nicht während des eigentlichen Herstellungsprozesses der Fasern, beispielsweise durch Behandeln in einem Wasserbad oder gezieltem Aussetzen einer feuchten Atmosphäre, unterzogen werden müssen. Es reicht völlig aus, die Fasern erst bei weiteren Verarbeitungsstufen, bei denen die Fasern mit einem wässrigen Milieu in Kontakt kommen, entsprechend zu behandeln. So lassen sich die Eigenschaften ohne weiteres bei einem Färben in wässriger Flotte auslösen oder bei Behandlung des fertigen Textils in beispielsweise Sattdampf.

Das Pillverhalten von textilen Flächengebilden wird nach dem sog. Random Tumble Pilling Test (RTPT) nach DIN 53867 durchgeführt. Der Oberflächenzustand wird nach 5, 10, 20, 30, 40 und 60 Minuten anhand der POS-Skala (Pilling Ordinal Skala) mit 9 Noten (Note 9: unverpillt, beste Note; Note 1: stark verpillt, schlechteste Note) beurteilt.

Es hat sich gezeigt, daß textile Flächengebilde, welche unter Verwendung der erfindungsgemäß hergestellten Fasern hergestellt worden sind, gute bis sehr gute Pillnoten aufweisen. Die Noten liegen im Bereich von 7 -9.

Eine andere Möglichkeit um das Pillverhalten von pillarmen Fasern zu testen, besteht darin, daß man an den Fasern einen Knickscheuertest durchführt. Es hat sich gezeigt, daß zwischen den erhaltenen Knickscheuerfestigkeitswerten und der Pilleresistenz eine Abhängigkeit besteht. So weisen Fasern, die im Mittel beim Knickscheuertest nach 100 - 300 Doppelhubzügen brechen, eine gute Pillingresistenz in einem Gewebe auf.

Fasern, hergestellt gemäß der Erfindung, brechen nach der hydrolytischen Behandlung im Mittel bei einem Knickscheuertest nach 300 Doppelhubzügen und weniger.

Hinweise, die Knickscheuerfestigkeit als Maß für das Pillverhalten zu untersuchen, sind u. a. dem Buch von Fourne "Synthetische Fasern" Carl Hanser Verlag München Wien 1995, Seite 781, zu entnehmen.

Die Knickscheuerfestigkeit kann z. B. nach folgender Methode gemessen werden:

Einzelne Fasern werden mit einer Frequenz von 126 Doppelhüben / min. in einem Winkel von 110° über einen Stahldraht geknickt. Durch eine festgelegte Vorspannkraft von 0,45 cN/dtex wirkt eine definierte Scheuerung auf die Faser ein. Der Durchmesser des verwendeten Stahldrahtes richtet sich nach der Faserfeinheit und nimmt bei gröberen Fasern zu. An 50 Fasern wird die Anzahl der Doppelhübe bis zum Bruch ermittelt. Der Mittelwert dieser 50 Prüfungen erlaubt Rückschlüsse auf die Beanspruchbarkeit rechtwinklig zur Faserachse und gibt somit einen Hinweis auf die Pillneigung der geprüften Fasern.

Die Erfindung wird durch folgende Beispiele näher erläutert:

### Beispiel 1:

In einer 150 Kg Batch Reaktorkaskade wird der Anmaischer mit 86,5 Kg PTA, 34,91 Ethylenglykol und 10 ml Cholin (10 %-ige Lösung in Methanol) gefüllt und eine halbe Stunde bei 60°C gerührt. Die Maische wird anschließend in den Veresterer überführt und bei 2,8 bar Überdruck verestert. Die Innentemperatur des Präpolymeren läßt man dabei auf 265°C ansteigen, das entstehende Reaktionswasser wird über eine Kolonne abgeführt. Bei Abfall der Kolonnenkopftemperatur wird der Reaktordruck auf Normaldruck abgesenkt,
wobei restliches Reaktionswasser und überschüssiges Glykol übergeht. Die Innentemperatur wird dabei auf 280°C erhöht.

Dem Präpolymeren werden anschließend 43 g Hordaphos PHM zugegeben und 5 Minuten gerührt. Anschließend werden 1 600 g einer 1,25 % Antimonglykolatlösung in Glykol zugesetzt und eine Minute einrühren lassen. Vor Überdrücken der Schmelze werden 180 g einer 10%-igen TiO2 Suspension in EG zugegeben und eine Minute einrühren lassen.

Während dem Überdrücken des Präpolymeren wird die niedrigviskose Schmelze filtriert und der Druck im Polykondensierer stufenweise auf 1 mbar abgesenkt. Bei einem Molekulargewicht M_{w} = 17 100 g/mol werden der Schmelze 830 g Tetrakistetrahydrofurfuryloxysilan über eine Schleuse zugegeben. Während der Zugabe (Dauer ca. 1 Minute) wird der Druck im Reaktor mit Hilfe von N₂ auf ca. 100 mbar angehoben und anschließend wieder auf ca. 1 mbar abgesenkt. Bei einem Molekulargewicht von ca. M_{w} = 36 500 g/mol wird der Reaktor mit N₂ belüftet und das Polymer mittels beheizter Düsenplatten in groben Strängen über Kühlbäder ausgetragen und granuliert.

Das so hergestellte Granulat wird in einen Taumeltrockner gegeben und 10 Stunden lang getrocknet. Hierbei wird die Temperatur des Granulats zuerst in 4 Stunden kontinuierlich von 50°C auf 90°C und dann in 6 Stunden auf 190°C erhöht. Das modifizierte PET wird bei einer Schmelzetemperatur von 293°C in einer der Technik nach üblichen Schmelzspinnvorrichtung mit einer Spinndüse, die mit 540 Löcher mit Durchmesser von 0,4 mm durchbohrt ist, versponnen. Der Schmelzedurchsatz der Düse beträgt dabei 526 g/min. Die aus der Düse tretenden Filamente werden rechtwinklig mit 40°C warmer Luft und am unteren Ende des Spinnschachtes mit einer Spinnpräparation versehen. Der Spinnfaden wird mit einer Geschwindigkeit von 1 300 m/min. aufgewickelt.

Die so erhaltenen Spinnfäden werden zu einem Spinnkabel von 58,3 ktex gefacht, das kontinuierlich in eine 55°C warmen wässrigen Präparationsbadlösung geführt wird.

Anschließend wird das Kabel mit einem Verstreckfaktor von 4,3 bei 76°C gestreckt, in einer Kräuselmaschine gekräuselt und spannungslos in einem Ofen bei 120°C für ca. 11 Minuten fixiert. Das Kabel wird in Fasern mit einer mittleren Stapellänge von 38 mm geschnitten.

Es werden Stapelfasern mit folgenden Eigenschaften erhalten:

| | |
|---|---|
| Titer der Einzelfaser: | 1,9 dtex |
| Reißfestigkeit: | 32,6 cN/tex |
| Höchstzugkraftdehnung: | 34,3 % |
| Schrumpf (200°C Heißluft): | 9,9 % |
| Knickscheuertouren: | 820 Doppelhubzüge |

nach 60 minütiger Flockenfärbung bei 130°C: Knickscheuertouren: 240 Doppelhubzüge Das Molekulargewicht nach Färbung wird mit M_{w} = 22 700 g/mol betimmt.

### Beispiel 2:

In einer 150 Kg Batch Reaktorkaskade wird der Anmaischer mit 86,5 Kg PTA, 34,9 L Glykol befüllt und eine halbe Stunde bei 60°C gerührt. Die Maische wird anschließend in den Veresterer überführt 197g einer 3%igen Kaliumtitanyloxalatlösung zugegeben und bei 2,8 bar Überdruck verestert. Es wird weiter wie unter Beispiel 1 angegeben verfahren. Bei einem Molekulargewicht M_{w} = 8 700 g/mol werden der Schmelze 870 g Tetrakistetrahydrofurfuryloxysilan über eine Schleuse zugegeben. Bei einem Molekulargewicht von ca. M_{w} = 34 700 g/mol wird der Reaktor mit N₂ belüftet und das Polymer granuliert.

Das so erhaltene Granulat wird wie in Beispiel A beschrieben verarbeitet, es werden Stapelfasern mit folgenden Eigenschaften erhalten:

| | |
|---|---|
| Titer der Einzelfaser: | 2,0 dtex |
| Reißfestigkeit: | 31,3 cN/tex |
| Höchstzugkraftdehnung: | 27,6 % |
| Schrumpf (200°C Heißluft): | 4,8 % |
| Knickscheuertouren: | 805 Doppelhubzüge |

nach 60 minütiger Flockenfärbung bei 130°C: Knickscheuertouren: 280 Doppelhubzüge

Das Molekulargewicht nach Färbung wurde mit M_{w} = 25 000 g/mol bestimmt.

## Patentansprüche

1. Verfahren zur Herstellung von pillarmen Polyesterfasern auf der Basis von Polyethylenterephthalat durch Umesterung mindestens eines Dicarbonsäuredialkylesters oder Veresterung mindestens einer Dicarbonsäure mit mindestens einem Diol und nachfolgender Vorkondensation und Polykondensation in Gegenwart üblicher Katalysatoren und unter Mitverwendung von silizium-organischen Verbindungen, **dadurch gekennzeichnet, daß** man dem Reaktionsgemisch 100-2000 ppm einer silizium-organischen Verbindung, berechnet als Silicium, bezogen auf das fertige Polykondensat, zugibt, die am Silizium mindestens einen Substituenten der Formel 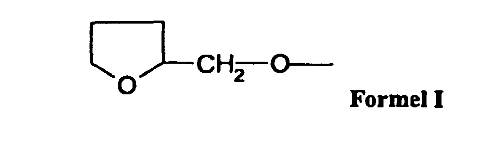 aufweist, und das erhaltene Polykondensat zu Fasern verarbeitet und diese zu irgendeinem Zeitpunkt nach dem Verspinnen mit einem wasserenthaltenden Medium zwecks Hydrolyse behandelt.

2. Verfahren nach Anspruch 1, **dadurch gekennzeichnet, daß** man als Silicium-Organische-Verbindung Tetrakistetrahydrofurfuryloxysilan verwendet.

3. Verfahren nach Anspruch 1,**dadurch gekennzeichnet, daß** man als Silicium-Organische-Verbindung Tristetrahydrofurfuryloxymethylsilan verwendet.

4. Verfahren nach mindestens einem der Ansprüche 1 - 3, **dadurch gekennzeichnet, daß** man das Verfahren kontinuierlich durchführt.

5. Verfahren nach mindestens einem der Ansprüche 1 - 3, **dadurch gekennzeichnet, daß** man das Verfahren diskontinuierlich durchführt.

6. Verfahren nach mindestens einem der Ansprüche 1 - 5, **dadurch gekennzeichnet, daß** man 100 - 2000 ppm der Silicium-Organischen-Verbindung, berechnet als Silicium, bezogen auf Gewichtsreaktionsgemisch verwendet.

7. Verfahren nach mindestens einem der Ansprüche 1 - 6, **dadurch gekennzeichnet, daß** man die Silicium-Organische-Verbindung im Falle der Umesterung von Dicarbonsäuredialkylester mit mindestens einem Diol nach der Umesterung zusetzt.

8. Verfahren nach mindestens einem der Ansprüche 1 - 7, **dadurch gekennzeichnet, daß** man als Dicarbonsäurealkylester Dimethylterephthalat verwendet.

9. Verfahren nach mindestens einem der Ansprüche 1 - 8, **dadurch gekennzeichnet, daß** man die Silicium-Organische-Verbindung zu einem Zeitpunkt zusetzt, bei dem das Polykondensat ein Molekulargewicht M_{w} von 3000 - 20 000 g/mol aufweist.

10. Verfahren nach mindestens einem der Ansprüche 1 - 9, **dadurch gekennzeichnet, daß** man die Silicium-Organische-Verbindung zu einem Zeitpunkt einbringt, bei dem der Druck im Reaktor 0,5 mbar - 1,5 bar beträgt.

11. Verfahren nach mindestens einem der Ansprüche 1 - 10, **dadurch gekennzeichnet, daß** die Silicium-Organische-Verbindung zu einem Zeitpunkt der Polykondensationsschmelze zugesetzt wird, bei dem der Carboxylgruppengehalt des Polykondensats geringer als 35 mMol/kg ist.

12. Verfahren nach mindestens einem der Ansprüche 1 - 10, **dadurch gekennzeichnet, daß** man die Behandlung mit einem wasserenthaltenden Medium bei Temperaturen von 80 - 150° C vornimmt.

13. Pillarme Polyesterfasern auf der Basis von Polyethylenterephthalat erhältlich nach einem Verfahren gemäß mindestens einem der Ansprüche 1 - 12.

## Claims

1. A method for producing low pill polyester fibers on the basis of polyethylene terephthalate by transesterification of at least one dicarboxylic acid dialkyl ester or esterification of at least one dicarboxylic acid with at least one diol and subsequent precondensation and polycondensation in the presence of customary catalysts and using organosilicon compounds, **characterized in that** the reaction mixture has added to it 100-2000 ppm of an organosilicon compound, calculated as silicon, relative to the finished polycondensate, which has at least one substituent of the formula 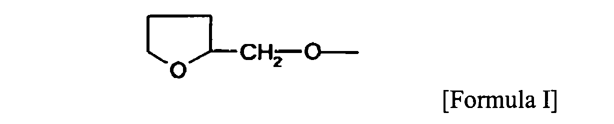 on the silicon, and the polycondensate obtained is processed into fibers and these are treated with a water-containing medium at any point in time after spinning for the purpose of hydrolysis.

2. The method according to Claim 1, **characterized in that** the organosilicon compound used is tetrakistetrahydrofurfuryloxysilane.

3. The method according to Claim 1, **characterized in that** the organosilicon compound used is tristetrahydrofurfuryloxymethylsilane.

4. The method according to at least one of Claims 1 to 3, **characterized in that** the method is carried out continuously.

5. The method according to at least one of Claims 1 to 3, **characterized in that** the method is carried out batchwise.

6. The method according to at least one of Claims 1 to 5, **characterized in that** the organosilicon compound is used in an amount of 100-2000 ppm, calculated as silicon and relative to weight reaction mixture.

7. The method according to at least one of Claims 1 to 6 **characterized in that**, in the case of the transesterification of dicarboxylic acid dialkyl ester with at least one diol, the organosilicon compound is added after said transesterification.

8. The method according to at least one of Claims 1 to 7, **characterized in that** the dicarboxylic acid alkyl ester used is dimethyl terephthalate.

9. The method according to at least one of Claims 1 to 8, **characterized in that** the organosilicon compound is added at a point in time when the polycondensate has a molecular weight M_{w} of 3000-20 000 g/mol.

10. The method according to at least one of Claims 1 to 9, **characterized in that** the organosilicon compound is added at a point in time when the pressure in the reactor is 0.5 mbar-1.5 bar.

11. The method according to at least one of Claims 1 to 10, **characterized in that** the organosilicon compound is added to the polycondensation melt at a point in time when the carboxyl group content of the polycondensate is less than 35 mmol/kg.

12. The method according to at least one of Claims 1 to 10, **characterized in that** the treatment with a water-containing medium is carried out at temperatures of 80-150° C

13. Low pill polyester fibers on the basis of polyethylene terephthalate obtainable by a method according to at least one of Claims 1 to 12.

## Revendications

1. Procédé pour la production de fibres de polyester résistantes au boulochage se basant sur téréphtalate de polyéthylène par la transestérification d'au moins un ester de dialkyle de l'acide dicarbonique ou l'estérification d'au moins un acide dicarbonique avec au moins un diol et suivie par précondensation et polycondensation dans la présence des catalyseurs usuels et avec l'utilisation de pair avec les composés organiques à silicium, **caractérisé en ce qu'**on ajoute au mélange de réaction 100-2000 ppm d'un composé organique à silicium, calculé comme silicium, rapporté au polycondensat final qui présente à silicium au moins un substituant avec la formule 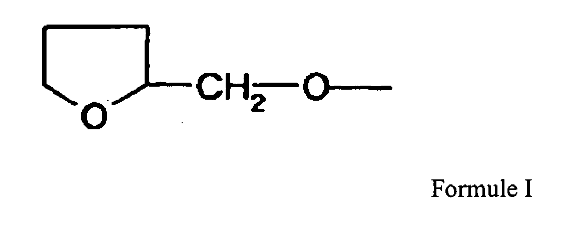 et le polycondensat obtenu est façonné en fibres et à un moment quelconque après filage celles-ci sont traitées avec un milieu contenant de l'eau avec le but de l'hydrolyse.

2. Procédé selon la revendication 1, **caractérisé en ce qu'**on utilise comme composé organique à silicium le tetrakistetrahydrofurfuryloxysilane.

3. Procédé selon la revendication 1, **caractérisé en ce qu'**on utilise comme composé organique à silicium le tristetrahydrofurfuryloxyméthylsilane.

4. Procédé selon au moins l'une des revendications 1-3, **caractérisé en ce que** le procédé se fait continuellement.

5. Procédé selon au moins l'une des revendications 1-3, **caractérisé en ce que** le procédé se fait de manière discontinue.

6. Procédé selon au moins l'une des revendications 1-5, **caractérisé en ce qu'**on utilise 100-2000 ppm de composé organique à silicium, calculé comme silicium, rapporté au poids du mélange de réaction.

7. Procédé selon au moins l'une des revendications 1-6, **caractérisé en ce que** dans le cas de la transformation de l'ester de dialkyle de l'acide dicarbonique avec au moins un diol, le composé organique à silicium s'ajoute après transformation.

8. Procédé selon au moins l'une des revendications 1-7, **caractérisé en ce qu'**on utilise comme ester d'alkyle de l'acide dicarbonique le téréphtalate de diméthyle.

9. Procédé selon au moins l'une des revendications 1-8, **caractérisé en ce que**, le composé organique à silicium s'ajoute à un moment dans lequel le polycondensat présente un poids moléculaire Mw de 3000-20000 g/mole.

10. Procédé selon au moins l'une des revendications 1-9, **caractérisé en ce que**, le composé organique à silicium s'ajoute à un moment dans lequel la pression dans le réacteur est de 0,5 mbar-1,5 bar.

11. Procédé selon au moins l'une des revendications 1-10, **caractérisé en ce que**, le composé organique à silicium s'ajoute à la masse fondue de polycondensat à un moment dans lequel la teneur de groupements carboxyliques du polycondensat est plus petit de 35 mmole/kg

12. Procédé selon au moins l'une des revendications 1-10, **caractérisé en ce que**, le traitement avec un milieu contenant de l'eau se réalise à températures de 80-150 °C.

13. Fibres de polyester résistantes au boulochage se basant sur téréphtalate de polyéthylène qui s'obtient par un procédé selon au moins l'une des revendications 1-12.
